Europäisches Patentamt

(19) European Patent Office

Office européen des brevets

(11) **EP 0 566 490 B1**

(12) **EUROPEAN PATENT SPECIFICATION**

(45) Date of publication and mention
of the grant of the patent:
**06.08.1997 Bulletin 1997/32**

(51) Int. Cl.$^6$: **C08F 2/42**, C08F 6/02,
C08F 210/02

(21) Application number: **93400981.2**

(22) Date of filing: **15.04.1993**

(54) **A process for refining an elastomeric polyolefin copolymer**

Verfahren zum Raffinieren von einem elastischen Polyolefin Copolymer

Procédé de raffinage d'une épolymère élastomérique de polyoléfine

(84) Designated Contracting States:
**DE GB IT NL**

(30) Priority: **17.04.1992 JP 140867/92**
**26.05.1992 JP 175881/92**
**30.06.1992 JP 210602/92**
**17.07.1992 JP 232551/92**

(43) Date of publication of application:
**20.10.1993 Bulletin 1993/42**

(73) Proprietor: **UBE INDUSTRIES, LTD.**
**Ube-shi, Yamaguchi-ken 755 (JP)**

(72) Inventors:
• **Inoue, Tokuji,**
**c/o Chiba Petrochemical Factory**
**Goi, Ichihara-city, Chiba-prefecture (JP)**
• **Tanaka, Kazuyuki,**
**c/o Chiba Petrochemical Factory**
**Goi, Ichihara-city, Chiba-prefecture (JP)**
• **Iikura, Kimihiko,**
**c/o Chiba Petrochemical Factory**
**Goi, Ichihara-city, Chiba-prefecture (JP)**

(74) Representative: **Peuscet, Jacques et al**
**SCP Cabinet Peuscet et Autres,**
**78, avenue Raymond Poincaré**
**75116 Paris (FR)**

(56) References cited:
**BE-A- 655 084**          **US-A- 3 644 321**
**US-A- 4 581 431**

• **H.F. MARK ET AL. 'Encyclopedia of Polymer**
**Science and Engineering' 1986 , VOL. 5, JOHN**
**WILEY & SONS , NEW YORK, US * page 554 -**
**page 556; figure 29; table 12 ***
• **Allan F.M. Barton, Solubility Parameters,**
**Chemical Reviews, 1975, Volume 75, No. 6,**
**Pages 731 to 753**

Remarks:
The file contains technical information submitted after the application was filed and not included in this specification

**Description**

BACKGROUND OF THE INVENTION

1. Field of the invention

This invention relates to a process for refining an elastomeric polyolefin copolymer such as an ethylene-propylene-diene terpolymer obtained by suspension polymerization in liquidized propylene, especially to a process for refining an elastomeric polyolefin copolymer polymerized with a catalyst essentially composed of vanadic compound and organoaluminium compound.

2. Background Information

An elastomeric polyolefin copolymer such as an ethylene-propylene rubber or an amorphous ethylene-propylene-diene terpolymer is widely produced by polymerizing ethylene, propylene, and, if necessary, diene wherein the polymeization reaction is carried out in the propylene in excess liquidized by compressing.

This process has many advantages. For example, elastomeric polyolefin copolymer is precipitated as fine particles and the polymerization system turns into a suspension as the polymerization proceeds, therefore, the polymerization system does not become viscous even when the molecular weight of the copolymer goes up.

In addition, the heat produced by polymerization is quite effectively removed by evaporation of the liquidized propylene.

Though this process has the great advantages mentioned above, there is a difficulty to remove catalyst residue contained in the copolymer particle because the copolymer particle takes in the catalyst when precipitated in the liquidized propylene.

Many attempts were made to obtain an elastomeric polyolefin copolymer having a low content of vanadic compound, e.g. as little as 5∅ ppm or less. Some of these attempts are shown below.

Japanese examined patent publication No. 46-5156 discloses a refining process wherein a solution of a catalyst-decomposing reagent such as hydrochloric acid, acetic acid, tartalic acid, glucuronic acid, or sodium hydrate is added to a copolymer suspension and then an organic solvent such as toluene is added.

Japanese examined patent publication No. 48-16∅63 discloses a refining process wherein ethyl alcohol, or an aqueous solution of sodium hydroxide or tartalic acid is added to a copolymer suspension at a pressure higher than the pressure in the polymerization vessel to decompose catalyst.

Japanese examined patent publication No. 46-6985 discloses a refining process wherein polyetheramine or polyetherdiamine is added to the suspension and water is added to wash out the catalyst residue.

Japanese unexamined patent publication No. 6∅-69112 discloses a process wherein a surfactant and a good solvent such as toluene are added then water is added.

US-A-4 581 431 discloses a process for purifying a rubbery polymer containing a catalyst residue by:

(1) adding a good solvent, i.e. a solvent having a measured solubility parameter ranging between 7.24 and 9.15 (see column 2, lines 62 to 66) to the polymer slurry in the first step,
(2) adding water to the slurry obtained in above (1) in second step.

This document discloses the use of a good solvent for removing catalyst residue.

US-A-3 644 321 discloses the use of lower alkanols for purifying polyolefin suspensions already containing a $C_4$ to $C_{12}$ hydrocarbon which is a good solvent.

However, by the refining process mentioned above, an elastomeric polyolefin copolymer having a low vanadium concentration of 5ppm or less could be hardly obtained.

SUMMARY OF THE INVENTION

This invention is aimed to provide a refining process for an elastomeric polyolefin copolymer obtained by suspension polymerization in an $\alpha$-olefin, such as propylene, which is liquidized by compressing.

The refining process of this invention can be applied preferably to refining an elastomeric polyolefin copolymer such as ethylene-propylene rubber, amorphous ethylene-propylene-diene terpolymer, amorphous ethylene-butene-1 copolymer, ethylene-butene-1-diene and other copolymers obtained by suspension polymerization in liquidized propylene or butene-1.

The process of the invention provides an elastomeric polyolefin copolymer having a quite low vanadium content of less than 5 ppm.

The process of this invention consists in adding further hydrogen peroxide to the polymerization system in order to

2

decompose catalyst contained in the particles.

The process of this invention comprises the steps of:

a) adding a solvent selected from the group consisting of n-hexane, n-heptane, n-octane, n-nonane, n-undecane, n-dodecane, cyclopentane, cyclohexane, cycloheptane, methylcyclohexane, benzene, toluene, xylene, ethylbenzene, styrene, methyl ethylketone, diethylether, ethylacetate, acetic acid, chloroform and tetrachloroethane and an alcohol to the polymerization system, and then

b) adding water and/or aqueous alkaline solution and adding hydrogen peroxide in addition to water and/or the aqueous alkaline solution to remove the catalyst residue.

In the step (a), the copolymer particles are swelled by the good solvent added in the suspension. Then the added alcohol penetrates into the copolymer particles and decomposes catalyst contained in the particles.

In the step (b), the decomposed catalyst residue is dissolved in the water and/or the aqueous alkaline solution added, and is extracted into aqueous layer.

DESCRIPTION OF THE PREFERRED EMBODIMENTS

In the step (a), the solvent used is n-hexane, n-heptane, n-octane, n-nonane, n-decane, n-undecane, n-dodecane, cyclopentane, cyclohexane cycloheptane, methylcyclohexane, benzene, toluene, xylene, ethylbenzene, styrene, methylethylketone, diethylether, ethylacetate, acetic acid, chloroform, and/or tetrachloroethane. As well known these solvents are good solvents.

Any aliphatic, cyclic, or aromatic alcohol that can be indicated as R-OH ('R-' indicates an aliphatic group, a cycloaliphatic group, or an aromatic group) having 1 to 12 carbon atoms can be employed as the alcohol of step (a). For example, methyl alcohol, ethyl alcohol, n-propyl alcohol, iso-propyl alcohol, n-butyl alcohol, sec-butyl alcohol, tert-butyl alcohol, iso-butyl alcohol, n-amyl alcohol, iso-amyl alcohol, hexyl alcohol, octyl alcohol, nonyl alcohol, decyl alcohol, undecyl alcohol, dodecyl alcohol, cyclopentyl alcohol, cyclohexyl alcohol, benzyl alcohol, and/or cynnamoil alcohol can be employed.

Hydrogen peroxide can be added in addition to the alcohol mentioned above. Hydrogen peroxide is preferably added as an aqueous solution having a hydrogen peroxide content of 3 to 60% by weight.

The amount of the good solvent is preferably $0.01$ to $0.40$ parts by weight, more preferably $0.02$ to $0.20$ parts by weight, the most preferably $0.04$ to $0.10$ parts by weight per $1.00$ parts by weight of unreacted α-olefin in the copolymer suspension. When the amount of the good solvent added to the suspension is less than $0.01$ parts by weight, the copolymer particle does not swell enough and the catalyst residue remains in the copolymer particle. On the other hand, when the amount of the good solvent exceeds $0.40$ parts by weight, the copolymer particle dissolves in the good solvent and the viscosity of the suspension quite goes up.

The good solvent and the alcohol are preferably added in the ratio of $10/1$ to $1/100$ at a temperature of $-10$ to $60°C$.

The good solvent and the alcohol can be added in any sequence. The good solvent and the alcohol also can be added simultaneously or as a mixture.

The suspension is preferably stirred for 5 to $60$ minutes after adding the good solvent and the alcohol to contact the good solvent and the alcohol with the copolymer particles sufficiently.

In the step (b), any aqueous alkaline solution having a pH value of 12 or less can be employed. It is not preferable to employ an aqueous alkaline solution having a pH value of more than 12 because the decomposed catalyst residue is scarcely dissolved in such alkaline solution. For example, an aqueous solution of at least one of the compound selected from the group of sodium hydroxide, potassium hydroxide, lithium hydroxide, calcium hydroxide, barium hydroxide, and ammonia can be employed. Other chemicals such as primary amine, secondary amine, tertiary amine, pyridine, pyrazine, and the other kinds of organic bases can be employed.

Water also can be employed to extract the catalyst residue. The pH value of the water is preferably 5.5 or more.

Hydrogen peroxide is added in the step (b) to oxidize the catalyst residue. Hydrogen peroxide is preferably added as a 3 to $60$% aqueous solution.

Hydrogen peroxide and water and/or aqueous alkaline solution can be added in any sequence. Those reagents also can be added simultaneously.

The amount of water or the aqueous alkaline solution added is preferably $0.01$ to $10$ parts by weight per 1 parts by weight of the copolymer.

The amount of hydrogen peroxide added is preferably $5000$ mol or less per 1 mol of the vanadic compound employed as a catalyst.

The suspension is preferably stirred for 5 to $60$ minutes after adding water or other to contact water and/or solution with the copolymer particle sufficiently.

The step (b) is preferably carried out at a temperature of $-10$ to $60°C$.

An autoclave equipped with a stirrer, static mixer, or other kinds of equipment for contacting particles with liquid or gas, can be employed to carry out the step (a) and the step (b). The alcohol, and water or the aqueous alkaline solution can be added directly into a polymerization reactor after polymerization.

The following examples will illustrate this invention.

(Example 1)

5ØØg of liquidized propylene, 11ml of 5-ethylidene-2-norbornene, 2.9mmol of diethylaluminium chloride, and Ø.1mmol diethyl zinc were supplied in an autoclave made of stainless steel having a capacity of 2 litter. While maintaining the temperature in the autoclave at 2Ø°C, ethylene and a vanadium triacetylacetonate solution (Ø.Ø47mmol of vanadium triacetylacetonate was dissolved in 4cc (1cc = 1cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 25 minutes. Over a period of the polymerization reaction, a solution of a mixture of ethylmonochloromalonate and ethyldichloromalonate (The molar ratio of ethylmonochloromalonate and of ethyldichloromalonate was 4:6, and Ø.Ø9mmol of the mixture was dissolved in toluene to have a volume of 3ml) was also added continuously to enhance the activity of the catalyst.

After 25 minutes of polymerization, 563g of an ethylene-propylene-diene terpolymer suspension was obtained. This suspension had a particle content of 27.9% by weight. The particle content was obtained from the equation shown below:

particle content (% by weight) = amount of terpolymer(g)/amount of unreacted propylene(g)

The terpolymer in the suspension had a vanadium content of 18ppm and an aluminium content of 454ppm.

7Øml of a mixture of methyl alcohol and toluene (the volume ratio was 7:3) was added to the suspension, and then, the suspension was stirred vigorously at 2Ø°C for 1Ø minutes. Then, 43Øml of an aqueous solution of sodium hydroxide having a pH value of 1Ø was added to the suspension and the suspension was stirred for 2Ø minutes, then, left to stand for 3Ø minutes. Then, aqueous layer and unreacted monomers were removed and the obtained terpolymer was dried in a vacuum oven to remove toluene contained in the terpolymer.

The terpolymer had an ethylene content of 69.5% by weight, a propylene content of 25.8% by weight, and a 5-ethylidene-2-norbornene content of 4.7% by weight. The terpolymer also had a number average molecular weight Mn of 3Ø9,ØØØ and a weight average molecular weight Mw of 772,ØØØ and the ratio of Mw to Mn was 2.5. The terpolymer had a vanadium content of 2.8ppm and an aluminium content of 226ppm.

The vanadium and aluminium contents in the EPM and EPDM were determined by atomic absorption spectrometer (AA-66Ø Type) of SHIMAZU CORPORATION.

The monomeric composition of the EPM was determined from $^1$H-NMR spectra recorded at 8Ø °C on a NIHONDENSHI JNM-2ØØ instrument. A sample solution for $^1$H-NMR measurements was prepared in o-dichlorobenzene-d$_4$ to give a concentration of 2.5 - 5.Ø %(w/v). The peaks in a range from Ø.8 to 1.Ø5 ppm were assigned to methyl protons of propylene units. The peaks in a range from 1.Ø5 to 1.Ø7 ppm were assigned to methylene protons of ethylene units and to methine protons and methylene protons of propylene units. In the case of EPDM the peaks in a range from 1.Ø5 to 2.Ø8 ppm were assigned to methine protons and methylene protons in propylene units, to methylene protons in ethylene units, and to methine protons of -CH-, methylene protons, and methyl protons of ethylidene norbornene units. The peaks in a range from Ø.8 to 1.Ø5 ppm were assigned to methyl protons of propylene units. The peaks in a range from 5.Ø to 5.5 ppm were assigned to methine protons of =CH-of the ethylidene norbornene units.

The molecular weights of EPM and EPDM were determined by gel permeation chromatography using a GPC 15ØCV device of WATERS. The device was operated at 145 °C with o-dichlorobenzene as a mobile phase. A system of column filled with Shodex AT-8ØM and AT-8ØØP was calibrated based on the concept of universal calibration using polystyrene standards with a narrow distribution.

The Mooney viscosity (ML(1+4) at 1ØØ °C) was measured by Mooney viscometer (SMV-2ØØP Type) of SHIMAZU CORPORATION.

(Example 2)

5ØØg of liquidized propylene, 1Øml of 5-ethylidene-2-norbornene, 2.9mmol of diethylaluminium chloride, and Ø.1mmol diethyl zinc were supplied in the same autoclave used in the example 1. While maintaining the temperature in the autoclave at 23°C, ethylene and a vanadium triacetylacetonate solution (Ø.Ø4Ømmol of vanadium triacetylacetonate is dissolved in 5cc (1cc = 1cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 30 minutes. Over a period of the polymerization reaction, a solution of a mixture of ethylmonochloromalonate and ethyldichloromalonate (The molar ratio of ethylmonochloromalonate and of ethyldichloromalonate was 2:8, and Ø.15mmol of the mixture was dissolved in toluene to have a volume of 5ml) was also added continuously to enhance the activity of the catalyst.

After 3Ø minutes of polymerization, 571g of an ethylene-propylene-diene terpolymer suspension was obtained. This suspension had a particle content of 31.4% by weight. The particle content was obtained from the equation shown in the example 1.

The terpolymer in the suspension had a vanadium content of 14ppm and an aluminium content of 385ppm.

7Øml of a mixture of isopropyl alcohol and toluene (the volume ratio was 7:3) was added to the suspension, and then, the suspension was stirred vigorously at 2Ø°C for 1Ø minutes. Then, 43Øml of an aqueous solution of sodium hydroxide having a pH value of 11 was added to the suspension and the suspension was stirred for 2Ø minutes, then, left to stand for 3Ø minutes. Then, aqueous layer and unreacted monomers were removed and the obtained terpolymer was dried in a vacuum oven to remove toluene contained in the terpolymer.

The terpolymer had an ethylene content of 69.4% by weight, a propylene content of 26.4% by weight, and a 5-ethylidene-2-norbornene content of 4.2% by weight. The terpolymer also had a number average molecular weight Mn of 295,ØØØ and a weight average molecular weight Mw of 821,ØØØ and the ratio of Mw to Mn was 2.8. The terpolymer had a vanadium content of 2.5ppm and an aluminium content of 221ppm.

The ethylene and propylene contents were obtained in the same way as shown in Example 1. The molecular weight was also measured as shown in Example 1. The vanadium and aluminium contents were also measured in the way as shown in Example 1.

(Example 3)

5ØØg of liquidized propylene, 9ml of 5-ethylidene-2-norbornene, 2.9mmol of diethylaluminium chloride, and Ø.1mmol diethyl zinc were supplied in the same autoclave used in the example 1. While maintaining the temperature in the autoclave at 25°C, ethylene and a solution of vanadium triacetylacetonate (0.043mmol) in toluene (4cc) (1cc = 1 cm$^3$) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 25 minutes. Over a period of the polymerization reaction, a solution of a mixture of ethylmonochloromalonate and ethyldichloromalonate (The molar ratio of ethylmonochloromalonate and of ethyldichloromalonate was 1:9, and Ø.15mmol of the mixture was dissolved in toluene to have a volume of 5ml) was also added continuously to enhance the activity of the catalyst.

After 25 minutes of polymerization, 571g of an ethylene-propylene-diene terpolymer suspension was obtained. This suspension had a particle content of 26.7% by weight. The particle content was obtained from the equation shown in the example 1.

The terpolymer in the suspension had a vanadium content of 17ppm and an aluminium content of 441ppm.

1ØØml of a mixture of methyl alcohol and cyclohexane (the volume ratio was 7:3) was added to the suspension, and then, the suspension was stirred vigorously at 25°C for 1Ø minutes. Then, 4ØØml of an aqueous solution of potassium hydroxide having a pH value of 11 was added to the suspension and the suspension was stirred for 2Ø minutes, then, left to stand for 3Ø minutes. Then, aqueous layer and unreacted monomers were removed and the obtained terpolymer was dried in a vacuum oven to remove toluene contained in the terpolymer.

The terpolymer had an ethylene content of 69.7% by weight, a propylene content of 25.5% by weight, and a 5-ethylidene-2-norbornene content of 4.8% by weight. The terpolymer also had a number average molecular weight Mn of 365,ØØØ and a weight average molecular weight Mw of 818.ØØØ and the ratio of Mw to Mn was 2.2. The terpolymer had a vanadium content of 3.3ppm and an aluminium content of 254ppm.

The ethylene and propylene contents were obtained in the same way as shown in Example 1. The molecular weight was also measured as shown in Example 1. The vanadium and aluminium contents were also measured in the way as shown in Example 1.

( Example 4 )

5ØØg of liquidized propylene, 14ml of 5-ethylidene-2-norbornene, 2.9mmol of diethylaluminium chloride, and Ø.2mmol diethyl zinc were supplied in the same autoclave used in the example 1. While maintaining the temperature in the autoclave at 25°C, ethylene and a vanadium triacetylacetonate solution (Ø.Ø5Ømmol of vanadium triacetylacetonate was dissolved in 4cc (1cc = 1 cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 20 minutes. Over a period of the polymerization reaction, a solution of a mixture of ethylmonochloromalonate and ethyldichloromalonate (The molar ratio of ethylmonochloromalonate and of ethyldichloromalonate was 1:9, and Ø.15mmol of the mixture was dissolved in toluene to have a volume of 5ml) was also added continuously to enhance the activity of the catalyst.

After 2Ø minutes of polymerization, 59Øg of an ethylene-propylene-diene terpolymer suspension was obtained. This suspension had a particle content of 27.7% by weight. The particle content was obtained from the equation shown in the example 1.

The terpolymer in the suspension had a vanadium content of 19.9ppm and an aluminium content of 612 ppm.

4∅ml of toluene was added to the suspension, then 5∅ml of methanol was added to the suspension, and then, the suspension was stirred vigorously at 2∅°C for 1∅ minutes. Then, 1∅ml of a 3% hydrogen peroxide aqueous solution was added to the suspension and the suspension was stirred vigorously for 3∅ minutes, meanwhile, 4∅∅ml of an aqueous solution of sodium hydroxide having a pH value of 1∅ was added to the suspension, then, the suspension was left to stand for 3∅ minutes. Then, aqueous layer and unreacted monomers were removed and the obtained terpolymer was dried in a vacuum oven to remove toluene contained in the terpolymer.

The terpolymer had an ethylene content of 61.9% by weight, a propylene content of 29.4% by weight, and a 5-ethylidene-2-norbornene content of 8.7% by weight. The terpolymer also had a number average molecular weight Mn of 296,∅∅∅ and a weight average molecular weight Mw of 781,∅∅∅ and the ratio of Mw to Mn was 2.6. The terpolymer had a vanadium content of 3.1ppm and an aluminium content of 235ppm.

The ethylene and propylene contents were obtained in the same way as shown in Example 1. The molecular weight was also measured as shown in Example 1. The vanadium and aluminium contents were also measured in the way as shown in Example 1.

( Example 5 )

5∅∅g of liquidized propylene, 12ml of 5-ethylidene-2-norbornene, 2.5mmol of diethylaluminium chloride, and ∅.1mmol diethyl zinc were supplied in the same autoclave used in the example 1. While maintaining the temperature in the autoclave at 25°C, ethylene and a vanadium triacetylacetonate solution (∅.∅4∅mmol of vanadium triacetylacetonate was dissolved in 3cc (1cc = 1 cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 30 minutes. Over a period of the polymerization reaction, a solution of a mixture of ethylmonochloromalonate and ethyldichloromalonate (The molar ratio of ethylmonochloromalonate and of ethyldichloromalonate was 2:8, and ∅.12mmol of the mixture was dissolved in toluene to have a volume of 5ml ) was also added continuously to enhance the activity of the catalyst.

After 3∅ minutes of polymerization, 592g of an ethylene-propylene-diene terpolymer suspension was obtained. This suspension had a particle content of 28.1% by weight. The particle content was obtained from the equation shown in the example 1.

The terpolymer in the suspension had a vanadium content of 15.7ppm and an aluminium content of 519ppm.

4∅ml of cyclohexane was added to the suspension, then 6∅ml of isopropyl alcohol was added to the suspension, and then, the suspension was stirred vigorously at 2∅°C for 1∅ minutes. Then, 1∅ml of a 3% hydrogen peroxide aqueous solution was added to the suspension and the suspension was stirred vigorously for 3∅ minutes, meanwhile, 4∅∅ml of an aqueous solution of potassium hydroxide ( having a pH value of 9) was added to the suspension, then, the suspension was left to stand for 3∅ minutes. Then, aqueous layer and unreacted monomers were removed and the obtained terpolymer was dried in a vacuum oven to remove toluene contained in the terpolymer.

The terpolymer had an ethylene content of 63.7% by weight, and propylene content of 29.2% by weight, and a 5-ethylidene-2-norbornene content of 7.1% by weight. The terpolymer also had a number average molecular weight Mn of 243,∅∅∅ and a weight average molecular weight Mw of 615,∅∅∅ and the ratio of Mw to Mn was 2.5. The terpolymer had a vanadium content of 2.8ppm and an aluminium content of 225ppm.

The ethylene and propylene contents were obtained in the same way as shown in Example 1. The molecular weight was also measured as shown in Example 1. The vanadium and aluminium contents were also measured in the way as shown in Example 1.

( Example 6 )

5∅∅g of liquidized propylene, 14ml of dicyclopentadiene, 2.8mmol of diethylaluminium chloride, and ∅.1mmol of diethyl zinc were supplied in the same autoclave used in the example 1. While maintaining the temperature in the autoclave at 23°C, ethylene and a vanadium triacetylacetonate solution (∅.∅3∅mmol of vanadium triacetylacetonate was dissolved in 3cc (1cc = 1 cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 30 minutes. Over a period of the polymerization reaction, a solution of a mixture of ethylmonochloromalonate and ethyldichloromalonate (The molar ratio of ethylmonochloromalonate and of ethyldichloromalonate was 3:7, and ∅.15mmol of the mixture was dissolved in toluene to have a volume of 5ml) was also added continuously to enhance the activity of the catalyst.

After 3∅ minutes of polymerization, 585g of an ethylene-propylene-diene terpolymer suspension was obtained. This suspension had a particle content of 28.∅% by weight. The particle content was obtained from the equation shown in the example 1.

The terpolymer in the suspension had a vanadium content of 12.∅ppm and an aluminium content of 591ppm.

3∅ml of toluene was added to the suspension, then 7∅ml of ethyl alcohol was added to the suspension, and then, the suspension was stirred vigorously at 3∅°C for 1∅ minutes. Then, 15ml of a 3% hydrogen peroxide aqueous solution was added to the suspension and the suspension was stirred vigorously for 3∅ minutes, meanwhile, 4∅∅ml of an aqueous solution of sodium hydroxide (having a pH value of 9) was added to the suspension, then, the suspension was left to stand for 3∅ minutes. Then, aqueous layer and unreacted monomers were removed and the obtained terpolymer was dried in a vacuum oven to remove toluene contained in the terpolymer.

The terpolymer had an ethylene content of 58.8% by weight, a propylene content of 33.4% by weight, and an dicyclopentadiene content of 7.8% by weight. The terpolymer also had a number average molecular weight Mn of 316,∅∅∅ and a weight average molecular weight Mw of 841,∅∅∅ and the ratio of Mw to Mn was 2.7. The terpolymer had a vanadium content of 4.8ppm and an aluminium content of 327ppm.

The ethylene and propylene contents were obtained in the same way as shown in Example 1. The molecular weight was also measured as shown in Example 1. The vanadium and aluminium contents were also measured in the way as shown in Example 1.

( Example 7 )

5∅∅g of liquidized propylene, and 2.8mmol of diethylaluminium chloride were supplied in the same autoclave used in the example 1, then, hydrogen gas was supplied so as that a pressure gauge on the autoclave indicate at 0.14kg/cm$^2$,G (1 kg/cm$^2$ = 9.8x10$^4$Pa). While maintaining the temperature in the autoclave at 23°C, ethylene and a vanadium triacetylacetonate solution (0.030mmol of vanadium triacetylacetonate was dissolved in 3cc (1cc = 1 cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 35 minutes. Over a period of the polymerization reaction, a solution of a mixture of ethylmonochloromalonate and ethyldichloromalonate (The molar ratio of ethylmonochloromalonate and of ethyldichloromalonate was 4:6, and ∅.15mmol of the mixture was dissolved in toluene to have a volume of 1∅ml) was also added continuously to enhance the activity of the catalyst.

After 35 minutes of polymerization, 577g of an ethylene-propylene copolymer suspension was obtained. This suspension had a particle content of 31.4% by weight. The particle content was obtained by the equation shown in the example 1.

The copolymer in the suspension had a vanadium content of 11.∅ppm and an aluminium content of 489ppm.

4∅ml of cyclohexane was added to the suspension, then 5∅ml of ethyl alcohol was added to the suspension, and then, the suspension was stirred vigorously at 2∅°C for 1∅ minutes. Then, 1∅ml of a 3% hydrogen peroxide solution was added to the suspension and the suspension was stirred vigorously far 3∅ minutes, meanwhile, 4∅∅ml of an aqueous solution of sodium hydroxide having a pH value of 11 was added to the suspension, then, the suspension was left to stand for 3∅ minutes. Then, aqueous layer and unreacted monomers were removed and the obtained copolymer was dried in a vacuum oven to remove toluene contained in the copolymer.

The copolymer had an ethylene content of 57.6% by weight, a propylene content of 42.4% by weight, and also had a number average molecular weight Mn of 217,∅∅∅ and a weight average molecular weight Mw of 527,∅∅∅ and the ratio of Mw to Mn was 2.4. The copolymer had a vanadium content of 2.5ppm and an aluminium content of 22∅ppm.

The ethylene and propylene contents were obtained in the same way as shown in Example 1. The molecular weight was also measured as shown in Example 1. The vanadium and aluminium contents were also measured in the way as shown in Example 1.

( Example 8 )

5∅∅g of liquidized propylene, 1∅ml of dicyclopentadiene, 2.8mmol of diethylaluminium chloride, and ∅.1mmol of diethyl zinc were supplied in the same autoclave used in the example 1. While maintaining the temperature in the autoclave at 25°C, ethylene and a vanadium triacetylacetonate solution (∅.∅52mmol of vanadium triacetylacetonate was dissolved in 4cc (1cc = 1 cm$^3$) of toluene) were supplied to initiate polymerization. Ethylene was supplied at a pressure which was 2kg/cm$^2$,G (1 kg/cm$^2$ = 9.8x10$^4$Pa) higher than the pressure in the autoclave. Polymerization was carried on for 30 minutes. Over a period of the polymerization reaction, a solution of a mixture of ethylmonochloromalonate and ethyldichloromalonate (The molar ratio of ethylmonochloromalonate and of ethyldichloromalonate was 1:9, and ∅.18mmol of the mixture was dissolved in toluene to have a volume of 5ml) was also added continuously to enhance the activity of the catalyst.

After 25 minutes of polymerization, 6∅8g of an ethylene-propylene-diene terpolymer suspension was obtained. This suspension had a particle content of 31.6% by weight. The particle content was obtained by the equation shown in the example 1.

The terpolymer in the suspension had a vanadium content of 18.2ppm and an aluminium content of 518ppm.

5∅ml of xylene was added to the suspension, then ∅.3ml of 3∅% hydrogen peroxide aqueous solution was added to the suspension, and then, the suspension was stirred vigorously at 25°C for 1∅ minutes. Then, 5∅∅ml of an aqueous solution of potassium hydroxide (having a pH value of 1∅.5) was added to the suspension, then, the suspension was left to stand for 3∅ minutes. Then, aqueous layer and unreacted monomers were removed and the obtained terpolymer was dried in a vacuum oven to remove xylene contained in the terpolymer.

The terpolymer obtained had an ethylene content of 68.8% by weight, a propylene content of 25.8% by weight, and a dicyclopentadiene content of 5.4% by weight. The terpolymer also had a number average molecular weight Mn of 295,∅∅∅ and a weight average molecular weight Mw of 71∅,∅∅∅ and the ratio of Mw to Mn was 2.4. The terpolymer had a vanadium content of 3.1ppm and an aluminium content of 235ppm.

The ethylene and propylene contents were obtained in the same way as shown in Example 1. The molecular weight was also measured as shown in Example 1. The vanadium and aluminium contents were also measured in the way as shown in Example 1.

( Comparative Example 1)

563g of an ethylene-propylene-diene terpolymer suspension was obtained in the same way as indicated in the example 1. The terpolymer had a vanadium content of 18ppm and an aluminium content of 454ppm.

43∅ml of an aqueous solution of sodium hydroxide (having a pH value of 1∅) was added to the suspension and the suspension was vigorously stirred for 1∅ minutes at 2∅°C, and then, 7∅ml of a mixture of methyl alcohol and toluene (mixed in the portion of 7:3 by volume) was added to the suspension and stirred for 2∅ minutes, then, the suspension was left to stand for 3∅ minutes.

Then, aqueous layer and unreacted monomer were removed and the terpolymer was dried by a vacuum oven to remove toluene.

The terpolymer obtained had an ethylene content of 69.8% by weight, a propylene content of 25.5% by weight, and a 5-ethylidene-2-norbornene content of 4.7% by weight. The terpolymer also had a number average molecular weight Mn of 312,∅∅∅ and a weight average molecular weight Mw of 783,∅∅∅ and the ratio of Mw to Mn was 2.5. The terpolymer had a higher vanadium content of 8.6ppm and a higher aluminium content of 26∅ppm compared with the terpolymer obtained in example 1.

The ethylene and propylene contents were obtained in the same way as shown in Example 1. The molecular weight was also measured as shown in Example 1. The vanadium and aluminium contents were also measured in the way as shown in Example 1.

( Comparative Example 2 )

571g of an ethylene-propylene-diene terpolymer suspension was obtained in the same way as indicated in the example 2. The terpolymer had a vanadium content of 14ppm and an aluminium content of 396ppm.

5∅∅ml of an aqueous solution of sodium hydroxide (having a pH value of 12.2) was added to the suspension and the suspension was vigorously stirred for 3∅ minutes at 25°C, and then, the suspension was left to stand for 3∅ minutes.

Then, aqueous layer and unreacted monomers were removed and the terpolymer was dried by a vacuum oven to remove toluene.

The terpolymer obtained had an ethylene content of 69.2% by weight, a propylene content of 26.7% by weight, and a 5-ethylidene-2-norbornene content of 4.1% by weight. The terpolymer also had a number average molecular weight Mn of 291,∅∅∅ and a weight average molecular weight Mw of 824,∅∅∅ and the ratio of Mw to Mn was 2.8. The terpolymer had a higher vanadium content of 7.2ppm and a higher aluminium content of 283ppm compared with the terpolymer obtained in example 2.

The ethylene and propylene contents were obtained in the same way as shown in Example 1. The molecular weight was also measured as shown in Example 1. The vanadium and aluminium contents were also measured in the way as shown in Example 1.

( Comparative Example 3 )

571g of an ethylene-propylene-diene terpolymer suspension was obtained in the same way as indicated in the example 1. The terpolymer had a vanadium content of 17ppm and an aluminium content of 45∅ppm.

1∅∅ml of a mixture of methyl alcohol and cyclohexane ( mixed in the portion of 7:3 by volume) was added to the suspension and stirred vigorously for 3∅ minutes at 25°C, then, the suspension was left to stand for 3∅ minutes.

Then, the terpolymer was picked up and dried by a vacuum oven to remove methyl alcohol, cyclohexane, and unreacted monomer.

The terpolymer obtained had a higher vanadium content of 6.1ppm and a higher aluminium content of 277ppm compared with the terpolymer obtained in example 3.

The ethylene and propylene contents were obtained in the same way as shown in Example 1. The molecular weight was also measured as shown in Example 1. The vanadium and aluminium contents were also measured in the way as shown in Example 1.

**Claims**

1. A process for refining an elastomeric polyolefin copolymer which is obtained by copolymerization of ethylene, a liquidized α-olefin and optionally a diene characterized by the steps:

    a) adding a solvent selected from the group consisting of n-hexane, n-heptane, n-octane, n-nonane, n-decane, n-undecane, n-dodecane, cyclopentane, cyclohexane, cycloheptane, methylcyclohexane, benzene, toluene, xylene, ethylbenzene, styrene, methyl ethylketone, diethylether, ethylacetate, acetic acid, chloroform and tetrachloroethane and an alcohol to the polymerization system, and then
    b) adding water and/or aqueous alkaline solution and adding hydrogen peroxide in addition to water and/or the aqueous alkaline solution to remove the catalyst residue.

2. A process according to claim 1, wherein the elastomeric polyolefin copolymer is a copolymer polymerized with a catalyst essentially composed of a vanadic compound and an organoaluminium compound.

3. A process according to claims 1 and 2, wherein the elastomeric polyolefine copolymer is a copolymer polymerized in liquidized propylene.

4. A process according to any of claims 1 to 3, wherein the alcohol added in the step (a) is an aliphatic or aromatic alcohol having 1 to 12 carbon atoms.

5. A process according to any of the claims 1 to 4, wherein the aqueous alkaline solution added in the step (b) has a pH value up to 12.

6. A process according to any of the claims 1 to 5, wherein the amount of water or the aqueous alkaline solution added in the step (b) is 0.01 to 10 parts by weight per 1 part by weight of elastomeric polyolefin copolymer obtained by polymerization.

7. A process according to any of the claims 1 to 6, wherein the aqueous alkaline solution of the step (b) is an aqueous solution of at least any of the compound selected from the group consisting of alkaline metal hydroxide, alkaline earth metal hydroxide, ammonia, primary amine, secondary amine, and tertiary amine.

8. A process according to any of the claims 1 to 7, wherein hydrogen peroxide is added as an aqueous solution.

9. A process according to any of the claims 2 to 8, wherein 0.01 to 5000 mol of hydrogen peroxide per 1 mol of vanadic compound in the catalyst is added in the step (b).

**Patentansprüche**

1. Verfahren zur Raffination eines elastomeren Polyolefin-Copolymers, welches durch Copolymerisation von Ethylen mit einem verflüssigten α-Olefin und gegebenenfalls einem Dien erhalten wird, dadurch gekennzeichnet, daß man:

    a) ein Lösungsmittel, welches unter n-Hexan, n-Heptan, n-Octan, n-Nonan, n-Decan, n-Undecan, n-Dodecan, Cyclopentan, Cyclohexan, Cycloheptan, Methylcyclohexan, Benzol, Toluol, Xylol Ethylbenzol, Styrol, Methylethylketon, Diethylether, Ethylacetat, Essigsäure, Chloroform und Tetrachlorethan ausgewählt ist, und einen Alkohol zu dem Polymerisationssystem gibt und dann
    b) Wasser und/oder wäßrig-alkalische Lösung zugibt und zusätzlich zu Wasser und/oder der wäßrig-alkalischen Lösung Wasserstoffperoxid zugibt, um den Katalysatorrückstand zu entfernen.

2. Verfahren nach Anspruch 1, wobei das elastomere Polyolefin-Copolymer ein Copolymer ist, welches mit einem Katalysator polymerisiert wird, der sich im wesentlichen aus einer Vanadiumverbindung und einer Organoaluminiumverbindung zusammensetzt.

3. Verfahren nach Anspruch 1 und Anspruch 2, wobei das elastomere Polyolefin-Copolymer ein Copolymer ist, das in verflüssigtem Propylen polymerisiert wird.

4. Verfahren nach einem der Ansprüche 1 bis 3, wobei der in Stufe (a) zugegebene Alkohol ein aliphatischer oder aromatischer Alkohol mit 1 bis 12 Kohlenstoffatomen ist.

5. Verfahren nach einem der Ansprüche 1 bis 4, wobei die in Stufe (b) zugegebene wäßrig-alkalische Lösung einen pH-Wert von bis zu 12 aufweist.

6. Verfahren nach einem der Ansprüche 1 bis 5, wobei die in Stufe (b) zugegebene Menge an Wasser oder wäßrig-alkalischer Lösung 0,01 bis 10 Gew.-Teile pro 1 Gew.-Teil an durch Polymerisation erhaltenem elastomerem Polyolefin-Copolymer beträgt.

7. Verfahren nach einem der Ansprüche 1 bis 6, wobei die wäßrig-alkalische Lösung aus Stufe (b) eine wäßrige Lösung wenigstens einer Verbindung ist, die ausgewählt ist unter Alkalimetallhydroxiden, Erdalkalimetallhydroxiden, Ammoniak, primären Aminen, sekundären Aminen und tertiären Aminen.

8. Verfahren nach einem der Ansprüche 1 bis 7, wobei Wasserstoffperoxid als wäßrige Lösung zugegeben wird.

9. Verfahren nach einem der Ansprüche 2 bis 8, wobei 0,01 bis 5000 mol Wasserstoffperoxid pro 1 Mol Vanadiumverbindung im Katalysator in der Stufe (b) zugegeben werden.

**Revendications**

1. Procédé de purification d'un copolymère polyoléfinique élastomère qui est obtenu par copolymérisation d'éthylène, d'une alpha-oléfine liquéfiée et éventuellement d'un diène, caractérisé par les étapes consistant:

    a) à ajouter un solvant choisi dans le groupe formé par le n-hexane, le n-heptane, le n-octane, le n-nonane, le n-décane, le n-undécane, le n-dodécane, le cyclopentane, le cyclo-hexane, le cycloheptane, le méthylcyclohexane, le benzène, le toluène, le xylène, l'éthylbenzène, le styrène, la méthyléthylcétone, l'éther diéthylique, l'acétate d'éthyle, l'acide acétique, le chloroforme et le tétrachloroéthane et un alcool, au système de polymérisation, puis
    b) à ajouter de l'eau et/ou une solution basique aqueuse et à ajouter du peroxyde d'hydrogène en plus à l'eau et/ou à la solution basique aqueuse pour éliminer le résidu catalytique.

2. Procédé selon la revendication 1, dans lequel le copolymère polyoléfinique élastomère est un copolymère polymérisé avec un catalyseur essentiellement composé d'un composé vanadique et d'un composé organoaluminique.

3. Procédé selon les revendications 1 et 2, dans lequel le copolymère polyoléfinique élastomère est un copolymère polymérisé dans le propylène liquéfié.

4. Procédé selon l'une des revendications 1 à 3, dans lequel l'alcool ajouté à l'étape (a) est un alcool aliphatique ou aromatique ayant 1 à 12 atomes de carbone.

5. Procédé selon l'une des revendications 1 à 4, dans lequel la solution basique aqueuse ajoutée à l'étape (b) a un pH allant jusqu'à 12.

6. Procédé selon l'une des revendications 1 à 5, dans lequel la quantité d'eau ou la solution basique aqueuse ajoutée à l'étape (b) est de 0,01 à 10 parties en poids pour 1 partie en poids du copolymère polyoléfinique élastomère obtenu par polymérisation.

7. Procédé selon l'une des revendications 1 à 6, dans lequel la solution alcaline aqueuse de l'étape (b) est une solution aqueuse d'au moins l'un quelconque des composés choisis dans le groupe formé par un hydroxyde de métal alcalin, un hydroxyde de métal alcalino-terreux, l'ammoniac, une amine primaire, une amine secondaire et une amine tertiaire.

8. Procédé selon l'une des revendications 1 à 7, dans lequel le peroxyde d'hydrogène est ajouté sous forme de solution aqueuse.

9. Procédé selon l'une des revendications 2 à 8, dans lequel 0,01 à 5 000 moles de peroxyde d'hydrogène pour 1 mole de composé vanadique dans le catalyseur sont ajoutées à l'étape (b).